Europäisches Patentamt

(19) European Patent Office

Office européen des brevets

(11) Publication number: **0 458 559 A2**

## (12) EUROPEAN PATENT APPLICATION

(21) Application number: 91304521.7

(22) Date of filing: 20.05.91

(51) Int. Cl.⁵: **G06F 11/00**

(30) Priority: 24.05.90 GB 9011679

(43) Date of publication of application:
**27.11.91 Bulletin 91/48**

(84) Designated Contracting States:
**AT BE CH DE ES FR IT LI NL**

(71) Applicant: **SCHLUMBERGER INDUSTRIES LIMITED**
**124 Victoria Road**
**Farnborough Hampshire, GU14 7PW (GB)**

(72) Inventor: **Clarke, David John**
**The Grove, Packard Place**
**Bramford, Suffolk, IP8 4HA (GB)**

(74) Representative: **Stoole, Brian David et al**
**Schlumberger Industries Limited 124 Victoria Road**
**Farnborough Hampshire GU14 7PW (GB)**

(54) **Mask-programmable microprocessors.**

(57) A mask-programmable microprocessor, of the kind incorporating a ROM containing its program and a program counter for sequentially addressing the ROM to read out the program, is provided with a patch implementation module for use in correcting program errors discovered in the ROM after it has been programmed. The patch implementation module comprises a first address register for containing an address in the ROM just before that of the start of the program fragment containing the error, a second address register containing the address of the start of an additional program fragment which corrects the error and which is entered in a RAM associated with the microprocessor, eg from non-volatile memory on power-up, and a comparator which is responsive to the program counter reaching the address in the first register to load the address in the second register into the program counter. The additional program fragment is therefore sequentially addressed in place of the erroneous one, and is then arranged to restore the microprocessor to its normal address sequence at a point beyond the erroneous program fragment.

EP 0 458 559 A2

The present invention relates to mask-programmable microprocessors, and is more particularly but not exclusively concerned with single chip microcomputers based upon such microprocessors.

At the present time, many high volume products incorporate a microprocessor whose program is dedicated to supporting the functions of the particular product in question. For reasons of cost, it is common practice to implement the software for the microprocessor by means of a masked read only memory (ROM), which is typically incorporated in the same chip as the microprocessor, along with other circuit elements, to form a single chip microcomputer. Software implemented in a masked ROM is often referred to as "firmware", and is effectively fixed and unalterable. Consequently, fairly exhaustive development testing is required before the final form of the mask (and therefore of the software) is settled and volume production of the microcomputer can commence.

However, it frequently happens that, despite all the development testing, an error (or "bug") is discovered in the software after the production versions of the ROM or microcomputer have been produced in quantity, mounted on printed circuit boards and incorporated in the products. At this point, the only practical way of correcting the error may be to remove each ROM or microcomputer from its printed circuit board and replace it with a new one, made using a new mask modified to correct the error. It will be appreciated that this can be extremely expensive and inconvenient, since it normally requires a halt to production while a new mask is designed and new corrected ROMs or microcomputers are made; and the problem is made even more expensive and inconvenient if large numbers of products have already been sold or installed before the error or bug is discovered.

It is therefore an object of the present invention to alleviate this problem.

According to the present invention, there is provided a mask-programmable microprocessor comprising a read only memory storing the program of the microprocessor and a program counter for sequentially addressing the read only memory to readout the program therefrom, the microprocessor being provided with at least one patch implementation means for use in the event that an incorrect program fragment is discovered in the read only memory after programming thereof, said patch implementation means comprising an additional memory into which an additional program fragment can be written, and control means responsive to the program counter reaching an address earlier in sequence than that of the incorrect program fragment to cause the program counter to bypass the incorrect program fragment by addressing the additional memory to read out the additional program fragment in place of the incorrect program fragment, wherein the control means comprises a first address register for containing said earlier address, a second address register for containing the address of the additional program fragment and comparison means responsive to the program counter reaching the address in the first address register to load the address in the second address register into the program counter in place thereof, whereby the program counter addresses the additional memory instead of the read only memory, said additional program fragment being arranged to replace said incorrect program fragment and then reset the program counter to an address of the read only memory beyond that of the incorrect code fragment from which the program stored in the read only memory is desired to recommence operation.

The additional program fragment may be additionally arranged to change the address in at least the first address register to enable a second incorrect program fragment in the read only memory to be bypassed. Alternatively or additionally, the microprocessor may be provided with a plurality of such patch implementation means.

The additional memory preferably comprises a random access memory, for example a portion of a random access memory already provided in association with the microprocessor or a random access memory dedicated specifically to the patch implementation means. Alternatively or additionally, the additional memory may comprise an electrically alterable read only memory.

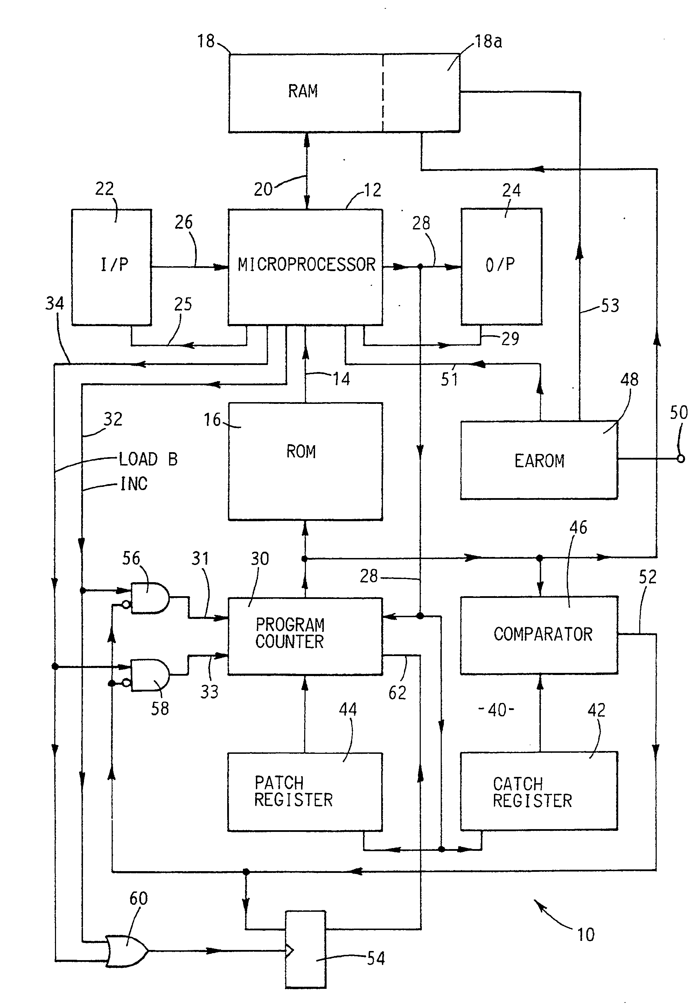

The invention will now be described, by way of example only, with reference to the accompanying drawing, which is a simplified block circuit diagram of a single-chip microcomputer in accordance with the present invention.

The microcomputer shown in the drawing is indicated generally at 10, and is implemented in CMOS technology using LSI techniques on a single silicon chip. The microcomputer 10 comprises a central processing unit (or arithmetic and logic unit) 12, which for the sake of convenience will hereinafter be referred to simply as the microprocessor, and which is coupled via a bus 14 to a masked read only memory (ROM) 16. As is conventional, the ROM 16 contains the program which controls the sequence of operations to be performed by the microprocessor. Also included in the microcomputer 10 is a random access memory (RAM) 18, which is coupled to the microprocessor 12 via a bus 20 and which is typically used to store data, eg measurements, being processed by the microprocessor and the resulting processed data, and input and output buffer circuits 22 and 24.

The input buffer circuit 22 receives input signals, eg measurements, from a product (not shown) being controlled by the microcomputer 10, and, when enabled by an enabling signal supplied by the microprocessor 12 over a line 25, converts these input signals into digital signals (if they are analogue signals), and then applies them via a bus 26 to the microprocessor for processing. The output buffer circuit 24, on the other hand, receives output signals, eg processed versions of the aforementioned input signals, from the microprocessor 12 via a bus 28, and, when enabled by an enabling signal supplied by the microprocessor over a line 29, converts them (if necessary) into analogue signals for use eg in controlling the operation of the aforementioned product.

As already indicated, the operations performed by the microprocessor 12 are determined by the program masked into the ROM 16, the sequence of these operations being determined by a program counter 30 which addresses the ROM: the effect of the program counter addressing a given address in the ROM is to cause the program step or instruction stored at that address to be read out into the microprocessor for execution thereby. In practice, the program counter 30 forms part of the microprocessor 12, but it is shown separately in the drawing for the sake of clarity. The program counter 30 is incremented by a signal INC supplied to its count input 31 by the microprocessor 12 over a line 32, and may also occasionally have a new count entered into it from the bus 28 under the control of a signal LOAD B (effectively a branch instruction) supplied to a first load input 33 of the counter by the microprocessor over a line 34.

The construction and operation of the microcomputer 10 as described thus far is fairly conventional, while the particular product controlled by the microcomputer, and the way that control is exercised, is not relevant to the present invention and will not therefore be described further.

As already mentioned, it is not unusual for at least one error or bug to be found in the program masked into the ROM 16 after the microcomputer 10 has been put into volume production and incorporated into large numbers of the aforementioned products. The present invention enables the effects of such an error or bug to be overcome, by providing the microcomputer 10 with a patch implementation module 40 which is brought into operation as will shortly be described once the error or bug is discovered.

In its simple form, suitable for applications involving errors in single threads of program code, the patch implementation module 40 basically comprises first and second address registers 42, 44, referred to as the catch register and the patch register respectively, a comparator 46 and an electrically alterable read only memory (EAROM) 48, which are coupled together to operate as will become apparent hereinafter.

To bring the patch implementation module into operation, the address of the first instruction in the error or bug discovered in the program in the ROM 16 is determined, and an address earlier than this error address in the sequence of addresses produced by the program counter 30, preferably the immediately preceding address, is entered into the EAROM 48 via an input port 50 provided for the purpose. Also, an additional or replacement program fragment, in the form of a single thread of program code, is entered into the EAROM 48, this additional program fragment being designed not only to replace the erroneous program fragment in the ROM 16, but also to subsequently cause the microprocessor 12 to produce a branch instruction which, by use of the signal LOAD B, resets the program counter 30 to a new count in its normal sequence, as will become apparent hereinafter. And lastly, an address for addressing the additional program fragment entered into the EAROM 48, in a manner to be explained shortly, is also entered into the EAROM. The precise order in which these two addresses and the additional program fragment are entered is a matter of design choice, as is the precise method of entry. For example, where the product incorporating the microcomputer 10 is a product associated with commodity metering, eg electricity metering, and provided with an electronic key receptacle of the kind described in our United Kingdom Patents Nos. 2153573, 2191622, 2191883, entry may be by means of an electronic key of the kind referred to in those patents and specially adapted for the purpose. And for metering products with an optical interface, eg as described in our United Kingdom Patent Application No. 8920446.5, entry may be via the optical interface.

The entry of the program fragments and the two addresses into the EAROM 48 is operative via a line 51 to cause the microprocessor 12, under the control of a part of the program in the ROM 16 dedicated to the operation of the patch implementation module 40, to copy the two addresses in the EAROM into the appropriate ones of the catch and patch address registers 42, 44 and to copy the additional program fragment into a section 18a of the RAM 18 reserved for the purpose (and whose addresses commence with the address which has been entered in the patch address register 44). This process of copying the code in the EAROM 48 is repeated each time the microcomputer 10 is powered up after a power off condition, since it will be appreciated that the RAM 18 and the registers 42, 44 represent volatile memory, the EAROM 48 being provided precisely because it is non-volatile.

In operation, the comparator 46 continually compares the count in the program counter 30 with the count stored in the catch register 42, and upon detecting equality, produces at its output 52 an output signal which enables a D-type latch 54, and disables two AND gates 56, 58 connected in the lines 32 and 34 respectively. The immediately subsequent INC or LOAD B signal produced by the microprocessor 12 is therefore prevented from reaching the program counter 30, but instead is operative via an OR gate 60 to set the latch 54.

The resulting signal at the set output of the latch 54 is applied to another load input 62 of the program counter 30, and causes the count in the patch register 44 to be loaded into the program counter, so causing the program counter to address the section 18a of the RAM 18 instead of the ROM 16. The microprocessor 12 therefore implements the first program step or instruction defined by the additional program fragment in the section 18a of the RAM 18. At this point, since the respective counts applied to the comparator 46 are no longer the same, its output changes, thus allowing the signals INC and LOAD B to reach the program counter 30 (and to reset the latch 54). The microprocesor 12 therefore implements the remainder of the program steps or instructions defined by the addiitional program fragment in the section 18a of the RAM 18 under the control of the program counter 30, with the counter having its count controlled in turn by the signals INC and LOAD B.

As already indicated, the additional program fragment typically comprises a corrected version of the erroneous program fragment discovered in the ROM 16 followed by a short code string constituting a branch instruction which causes the microprocessor to set the program counter 30 to an address immediately following that of the last instruction in the error or bug in the ROM 16. The microprocessor 12 is therefore restored to operation in accordance with the remainder of the program in the ROM 16, having effectively bypassed the error or bug.

It will be appreciated that the provision of the patch implementation module 40 provides a relatively simple mechanism for correcting belatedly discovered errors in the software masked into the ROM 16, at the expense of very little extra silicon (the amount required being not much more than that required for say a counter/timer).

Many modifications can be made to the described embodiment of the invention. For example, several patch implementation modules such as the module 40 can be provided, to enable several bugs or errors to be corrected or bypassed. Alternatively, the additional program fragment in the section 18a of the RAM 18 can be further arranged, having bypassed a first error or bug in the program in the ROM 16, to change the addresses in the catch and patch registers 42, 44 so that subsequently the same module can correct a second bug or error in the program in the ROM 16.

In another modification, the EAROM 48 can simply be omitted, and the code string entered therein can instead be directly entered into the section 18a of the RAM 18, provided that means of some kind are provided to ensure that the RAM 18 is reloaded with the appropriate code string, and the registers 42, 44 are appropriately loaded, upon each powering up of the microcomputer 10: Thus where the microcomputer 10 forms part of a product in a communication network, eg a product such as a radio teleswitch of the kind disclosed in our United Kingdom Patent No.

2070897, the appropriate code string can be transmitted to it upon each powering up of the microcomputer 10. As an alternative to this reloading, the section 18a of the RAM 18 can be made equivalent to a non-volatile memory by providing it with permanent battery back-up from a rechargeable battery which is continually trickle charged whenever the microcomputer 10 is powered up.

Finally, the patch implementation module 40 is desirably arranged to be enabled for use only if the addresses in the registers 42 and 44 are different (since otherwise the microprocessor 12 would repeatedly execute the same instruction). The module 40 can also be arranged to be enabled only if an appropriate enabling code is entered in a further register provided for the purpose, which ensures that it cannot be brought into operation inadvertently or by an unauthorised user, eg as a result of tampering with the inputs 50.

## Claims

1. A mask-programmable microprocessor comprising a read only memory storing the program of the microprocessor and a program counter for sequentially addressing the read only memory to read the program therefrom, the microprocessor being provided with at least one patch implementation means for use in the event that an incorrect program fragment is discovered in the read only memory after programming thereof, said patch implementation means comprising an additional memory into which an additional program fragment can be written, and control means responsive to the program counter reaching an address earlier in sequence than that of the incorrect program fragment to cause the program counter to bypass the incorrect program fragment by addressing the additional memory to read out the additional program fragment in place of the incorrect program fragment, wherein the control means comprises a first address register for containing said earlier address, a second address register for containing the address of the additional program fragment and comparison means responsive to the program counter reaching the address in the first address register to load the address in the second address register into the program counter in place thereof, whereby the program counter addresses the additional memory instead of the read only memory, said additional program fragment being arranged to replace said incorrect program fragment and then reset the program counter to an address of the read only memory beyond that of the incorrect code fragment from which the program stored in the read only memory is desired to recommence operation.

2. A microprocessor as claimed in claim 1, wherein the additional program fragment is additionally arranged to change the address in at least the first address register, whereby to enable a second incorrect program fragment in the read only memory to be bypassed.

3. A microprocessor as claimed in claim 1 or claim 2, comprising a plurality of such patch implementation means.

4. A microprocessor as claimed in any one of claims 1 to 3, wherein the additional memory comprises a random access memory.

5. A microprocessor as claimed in any one of claims 1 to 3, further comprising a random access memory for storing data being processed by the microprocessor, and wherein said additional memory comprises a dedicated portion of said random access memory.

6. A microprocessor as claimed in any preceding claim, wherein the additional memory comprises an electrically alterable read only memory.

7. A microprocessor as claimed in any preceding claim, wherein said patch implementation means is formed on a single silicon chip with substantially all of the remainder of the microprocessor.

8. A single chip microcomputer incorporating a microprocessor in accordance with claim 7.